# EUROPEAN PATENT SPECIFICATION

(11) **EP 4 581 246 B1**
(45) Date of publication and mention of the grant of the patent: **22.07.2026**
(21) Application number: 22768870.2
(22) Date of filing: 31.08.2022
(51) Int. Cl.: F01M 11/03, F16N 39/06, F02F 7/00

(54) **A MULTI-PISTON ENGINE HAVING AN ENGINE BLOCK WITH AN INDENTATION FOR RECEIVING AN OIL FILTER, A MARINE VESSEL AND A POWER PLANT**
MEHRKOLBENMOTOR MIT EINEM MOTORBLOCK MIT EINER VERTIEFUNG ZUR AUFNAHME EINES ÖLFILTERS, WASSERFAHRZEUG UND KRAFTWERK
MOTEUR À PISTONS MULTIPLES AYANT UN BLOC-MOTEUR COMPORTANT UNE INDENTATION POUR RECEVOIR UN FILTRE À HUILE, NAVIRE ET GROUPE MOTOPROPULSEUR

(43) Date of publication of application: 09.07.2025
(73) Proprietor: Wärtsilä Finland Oy, 65170 Vaasa (FI)
(72) Inventor: HÄGGBLOM, Daniel, 65170 Vaasa (FI)
(74) Representative: Boco IP Oy Ab
(86) International application number: PCT/FI2022/050572
(87) International publication number: WO 2024/047273

(56) References cited:
- CN-U- 212 376 713
- JP-A- H0 242 110
- US-A- 1 846 072
- US-A1- 2014 090 620

## Description

### FIELD OF THE DISCLOSURE

The present disclosure relates to multi-piston engines and, more particularly to the placement of an oil filter thereon. The present disclosure further concerns a marine vessel and a power plant equipped with such a multi-piston engine.

### BACKGROUND OF THE DISCLOSURE

Conventionally large multi-piston engines, such as ones used in marine vessels or power plants, have an oil filter attached to a side of the engine block with brackets, so as to include as many as possible of the components required to run the engine within the engine assembly. However, vibrations associated to such larger engines have been found excessively wear or even damage the oil filter.

Moreover, in current arrangements the oil filter protrudes past the engine block for the most part, thereby resulting in an increase of space occupied by the engine.

US2014/090620 A1 describes an example of a known multi-piston engine.

### BRIEF DESCRIPTION OF THE DISCLOSURE

An object of the present disclosure is to provide a multi-piston engine providing a more robust arrangement of attaching an oil filter thereto without increasing the space occupied by the engine, while simultaneously improving the longevity of the oil filter and facilitating servicing and/or maintenance thereof. It is a further object of the present disclosure to provide a marine vessel and a power plant equipped with such a multi-piston engine.

The object of the disclosure is achieved by the multi-piston engine, marine vessel and power plant which are characterized by what is stated in the independent claims. The preferred embodiments of the disclosure are disclosed in the dependent claims.

The disclosure is based on the idea of providing an indentation on the outer surface of the engine block, such that an oil filter is at least partly received within said indentation and attached to the engine block with brackets.

Such an arrangement allows the oil filter to be attached closer to the engine block, which in turn, allows relatively shorter brackets to be used for fixing the oil filter, thereby resulting in a more rigid support which is less susceptible to the vibration of the engine.

According to a first aspect of the present disclosure, a multi-piston engine is provided. The engine comprises an engine block having a plurality of combustion cylinders arranged along a longitudinal direction of the engine block. The engine further comprises a plurality of individual cylinder heads, each of which correspond to a respective combustion cylinder.

Suitably, such cylinder heads are also individually detachable from the engine. Moreover. the engine comprises a longitudinally extending common exhaust channel. Such an exhaust channel is coupled in fluid communication with the plurality of cylinders head so as to receive exhaust from the combustion cylinders during operation of the engine. The engine further comprises a longitudinally extending common charge air receiver coupled in fluid communication with the plurality of cylinder heads for conducting charged air to the combustion cylinders. Such an arrangement enables a turbocharger to be provided at a longitudinal end of the engine, the implications of which is discussed in more detail later below.

The engine block comprises an indentation on an outer surface thereof. The indentation comprises at least a bottom surface and a side surface. Preferably, but not necessarily, the indentation comprises at least a bottom surface and two side surfaces. Most suitably, the indentation is open from above.

Particularly, the engine further comprises an oil filter at least partly received within said indentation. That is, at least a part of the oil filter resides within a space delimited by surfaces of the indentation. Moreover, the oil filter is attached to the engine block with brackets extending between the oil filter and the engine block. It should be noted that such brackets may be provided as separate parts, or they could be integrated parts of e.g., of a housing or frame of the oil filter. Most suitably, the oil filter is an oil filter intended for filtering impurities from lubrication oil circulated within the engine.

Advantageously, the multi-piston engine is a reciprocating internal combustion engine, and is preferably also suitable for use in a marine vessel or a power plant. Typically, such engines have a power output of 2 MW - 7MW and operate at a nominal running speed of 250-1500 revolutions per minute. Moreover, the engine block itself is suitably provided as a single monolithic structure, e.g., a cast piece.

Suitably, the multi-piston engine has a modular configuration corresponding to the number of pistons is provided. Such a modular configuration of the engine is adapted to correspond to the number of pistons. That is, certain parts or components of the engine are provided at a number corresponding to the number of pistons, either directly or as a multiple thereof. Suitably, such modularly provided parts or components are identical with each other. Typically, such an engine with a modular architecture is configured by providing a number of power packs based on the requirements of the intended application. The number of power packs correspond to the number of cylinders and pistons, which dictates the shape and size engine block and the crank shaft. The power packs are then modularly equipped by providing a multiple of required components dedicated to each individual power pack.

For example, a power pack could be provided as a cylinder specific group of components with which each cylinder is equipped. That is, such a power pack could include e.g., a cylinder head, a cylinder sleeve, a piston, a crank arm etc.

From a maintenance point of view, servicing of an oil filter (e.g., replacement of the whole oil filter or an internal filter element thereof) could be carried out using the same lifting means (e.g., vertical hoisting) as intended for service operations requiring the removal of individual cylinder head of a modular configuration, for example.

Furthermore, unless explicitly otherwise stated, in the context of this disclosure, the term longitudinal is used to describe a direction parallel with a crankshaft of the engine, whereas the term lateral is used to describe a horizontal direction transverse to the longitudinal. Respectively, the word vertical is used to describe a direction transverse to the horizontal. That is, the longitudinal ends of the engine block are the sides thereof corresponding to opposing axial ends of the crankshaft, and the lateral sides of the engine block extend between the longitudinal ends thereof.

In an embodiment according to the first aspect of the present disclosure, the oil filter is attached to the engine block at least from a bottom surface of the indentation. This allows minimizing the length of brackets associated to the bottom surface of the indentation, as the oil filter at least partially resides above the indentation, and the associated brackets do not need to extend as far laterally or longitudinally.

In an embodiment according to the first aspect of the present disclosure, the oil filter is attached to the engine block at least from a lateral side of the engine block, a longitudinal end of the engine block, or both.

Particularly in combination with attaching the oil filter to the engine block from a bottom surface of the indentation, this has been found to provide a fixing arrangement able to withstand vibrations exceptionally well.

In an embodiment according to the first aspect of the present disclosure, the indentation is arranged at an external corner between a lateral side of the engine block and a longitudinal side of the engine block. That is. the indentation protrudes internally from both the longitudinal end and the lateral side of the engine block. Such an arrangement minimises the both the lateral and longitudinal protrusion of oil filter from the engine block.

In an embodiment according to the first aspect of the present disclosure, the engine block comprises an internal charge air receiver, which extends longitudinally from a longitudinal end of the engine block up to a distance from an opposing end of the engine block. That is, the charge air receiver is arranged as an internal duct of the engine block, extending longitudinally from one end up to distance from an opposite end. In such a case, the indentation is suitably arranged on a linear extension of said charge air receiver. More particularly, the indentation may be arranged on a linear extension of the charge air receiver on a longitudinal end from a distance of which the charge air receiver extends to.

Preferably, but not necessarily, the engine further comprises a turbocharger operationally coupled to the charge air receiver. In such a case the indentation is arranged at a longitudinal end of the engine block opposite to the turbocharger.

Such an arrangement allows minimising longitudinal protrusion of the oil filter past the longitudinal end of the engine block opposite to the turbocharger. Consequently, this allows main power take-off at the longitudinal end opposite to the turbocharger without an intermediate support of the main power shaft.

In addition, providing the turbocharger and the oil filter at opposite longitudinal ends provides the additional benefit of maximizing the flow route of the hot oil received from the turbocharger before it is re-introduced to the oil filter. This improves the longevity o the oil filter in at least two ways. Firstly, the temperature of the oil received form the turbocharger is sufficiently stabilized, as the oil flows through an oil sump or oil tank prio to being re-introduced to the oil filter. Additionally, such an arrangement allows for contaminants (such as carbon deposits) to settle at a bottom of the oil sump or oil tank before the oil is re-introduced to the oil filter. Consequently, the lubrication oil being of a more uniform consistency and temperature prolongs the lifetime of the oil filter. --

In an embodiment according to the first aspect of the present disclosure, a space above the oil filter is unobstructed. This allows removal of the oil filter by hoisting from above the engine, which in turn, greatly facilitates servicing of the engine. Particularly, as opposed to removal of the oil filter from below, hoisting from above prevents spilling of potentially hot oil contamination of the engine room when replacing the oil filter.

In an embodiment according to the first aspect of the present disclosure, a vertical projection of a centre of mass of the oil filter intersects with bottom surface of the indentation. This allows for a main portion of the oil filter weight to be supported on the bottom surface of the indentation.

In an embodiment according to the first aspect of the present disclosure, a centre of mass of the oil filter resides within the indentation. This, in turn, further allows a more rigid support which is less susceptible to the vibration of the engine.

In an embodiment according to the first aspect of the present disclosure, at least 1/2, preferably at least 2/3 of the oil filter resides within the indentation, in the lateral direction of the engine. This ensure that that the lateral protrusion of the oil filter past the engine block is minimized, thereby minimizing the required length of the brackets and space occupied by the engine.

In an embodiment according to the first aspect of the present disclosure, at least 1/2, preferably at least 2/3 of the oil filter resides within the indentation in the longitudinal direction of the engine. This ensure that that the longitudinal protrusion of the oil filter past the engine block is minimized, thereby minimizing the required length of the brackets and space occupied by the engine.

In an embodiment according to the first aspect of the present disclosure, at least 1/3, preferably at least 1/2 of the oil filter resides within the indentation in the height direction of the engine. This ensures that that the vertical protrusion of the oil filter past the engine block is minimized, thereby minimizing the required length of the brackets and space occupied by the engine.

In an embodiment according to the first aspect of the present disclosure, a width of the indentation defined in the lateral direction of the engine block is between 1/4 - 3/4 of the width of engine block. Preferably, the width of the indentation defined in the lateral direction of the engine block is 1/2 of the width of the engine block.

In an embodiment according to the first aspect of the present disclosure, a height of the indentation defined in the vertical direction of the engine block is between 1/4 - 1/2 of the height of engine block. Preferably, the height of the indentation is preferably 1/3 of the width of the engine block.

In an embodiment according to the first aspect of the present disclosure, a holding capacity of an engine lubrication oil sump or an engine lubrication oil tank is 1 m3 or above. This is considered to be a sufficiently large volume to allow stabilization of the oil temperature as well as settling of contaminant. In addition to settling of contaminants, the remaining oil (including non-settled contaminants is mixed during the flow path from the oil sump or oil tank to the oil filter, thereby also ensuring a uniform composition of the oil received at the oil filter.

Suitably, the engine comprises lubrication oil channels having a combined volume of no more than 15%, preferably no more than 10%, and more preferably no more than 5% of the holding capacity of the engine lubrication oil sump or engine lubrication oil tank. This is further considered to allow a sufficient retention time of the oil within the oil sump or oil tank for stabilization of the oil temperature and composition as well as settling of contaminants.

In an embodiment according to the first aspect of the present disclosure, the oil filter has a weight being 50% - 200% of a weight of an individual cylinder head. This ensures that the oil filter may be serviced using lifting means, such as a vertical hoist intended for removal and replacement of individual cylinder heads.

It should be noted that the first aspect of the present disclosure encompasses any combination two or more embodiment, or variants thereof, as discussed above.

According to a second aspect of the present disclosure, a marine vessel is provided. Particularly, the marine vessel comprises the engine discussed above in connection with the first aspect of the present disclosure. For example, the engine may be configured to power the propulsion system of the marine vessel at least in part.

According to a third aspect of the present disclosure, a power plant is provided. Particularly, the power plant comprises the engine discussed above in connection with the first aspect of the present disclosure. Suitably, the engine is configured to run an electric generator of the power plant

### BRIEF DESCRIPTION OF THE DRAWINGS

In the following the disclosure will be described in greater detail by means of preferred embodiments with reference to the accompanying drawings, in which
Fig. 1 schematically illustrate a multi-piston engine according to an embodiment of the present, depicted as a plan view seen from above;
Fig. 2 illustrates a portion of an engine block of the engine shown in of Fig. 1, as seen as a perspective view.
Fig. 3a illustrates an engine block of the engine shown in of Fig. 1 as seen from a longitudinal end thereof;
Fig. 3b illustrates the engine block of Fig. 3a, together with an oil filter;
Fig. 4a illustrates the engine block of the engine shown in of Fig. 1 as seen from a lateral side thereof;
Fig. 4b illustrates a portion the engine block of Fig. 4a, together with an oil filter
Fig. 5a illustrates a portion engine block of the engine shown in of Fig. 1 as seen from above, and
Fig. 5b illustrates the engine block of Fig. 5a, together with an oil filter.

### DETAILED DESCRIPTION OF THE DISCLOSURE

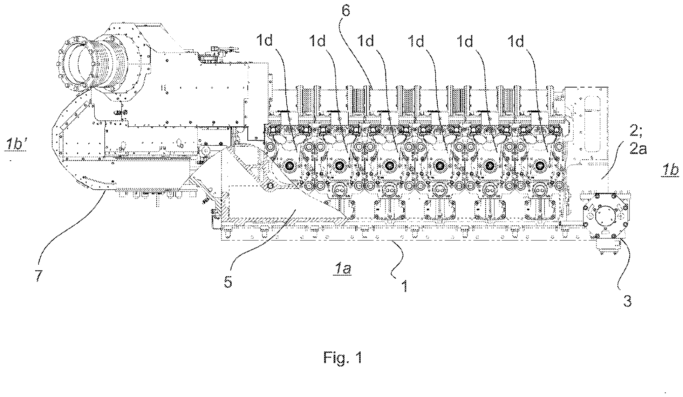

Fig. 1 schematically illustrates a multi-piston engine according to an embodiment of the present disclosure depicted as a plan view seen from form above. The multi-piston engine comprises an engine block 1 with multiple cylinders, each equipped with an individual cylinder head 1d. An indentation 2 is provided at a longitudinal end 1b of the engine block 1, and an oil filter 3 at least party received within said indentation 2. A turbo charger 7 is provided longitudinal end 1b' opposite to the indentation 2. Moreover, the engine block 1 comprises a longitudinally extending internal charge air receiver 5, shown as a partial cutout in Fig. 1 and the position of which is further illustrated with a dashed line. The turbocharger 7 is coupled to the charge air receiver 5 so as to feed charged air to each of the cylinders via the cylinder heads 1d, which are also coupled to the charge air receiver 5. Moreover, the cylinder heads 1d are also coupled to a longitudinally extending common exhaust channel 6 for receiving exhaust from the cylinders. Also the exhaust channel 6 is coupled to the turbocharger so as to rotate the turbine thereof.

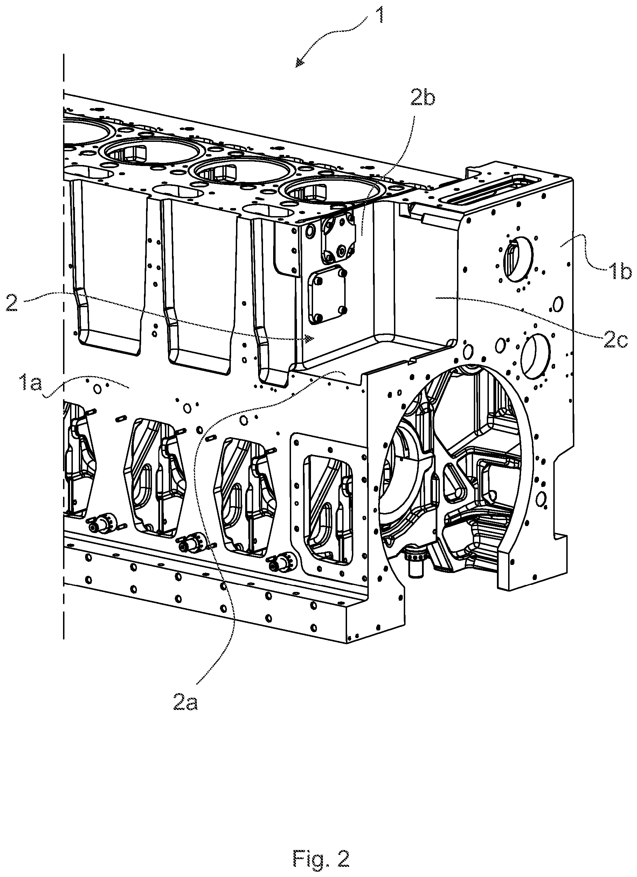

Fig. 2 schematically illustrates a portion of an engine block 1 the multi-piston engine according of Fig. 1, as seen as a perspective view. Particularly, the engine block 1 comprises an indentation 2 on an outer surface thereof. The indentation 2 comprises a bottom surface 2a and two side surfaces 2a, 2b transverse to both each other and the bottom surface 2a. Moreover, the indentation 2 is arranged at an external corner of the engine block 1, between a lateral side 1a of the engine block 1 and longitudinal end 1b of the engine block. That is, the indentation 2 is open from above and towards both the lateral side 1a and the longitudinal end 1b of the engine block 1.

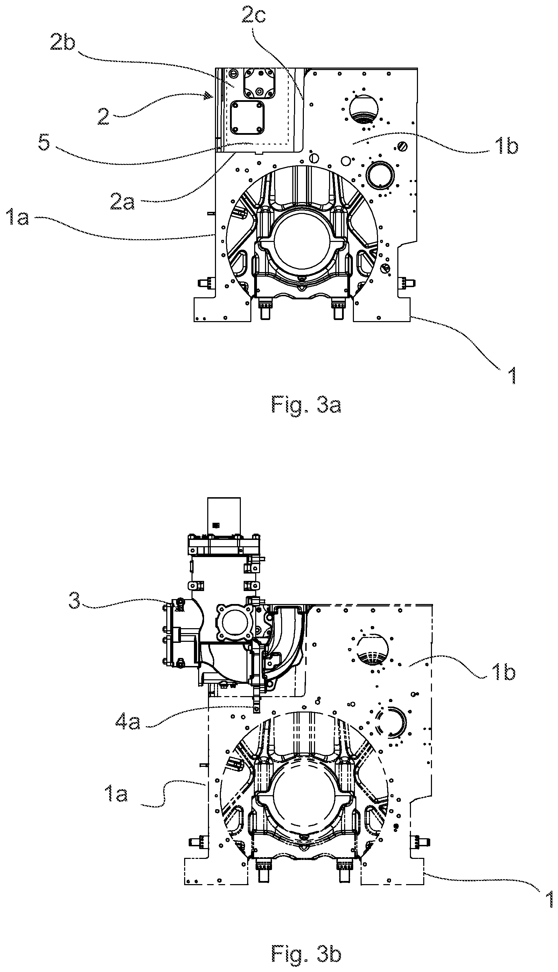

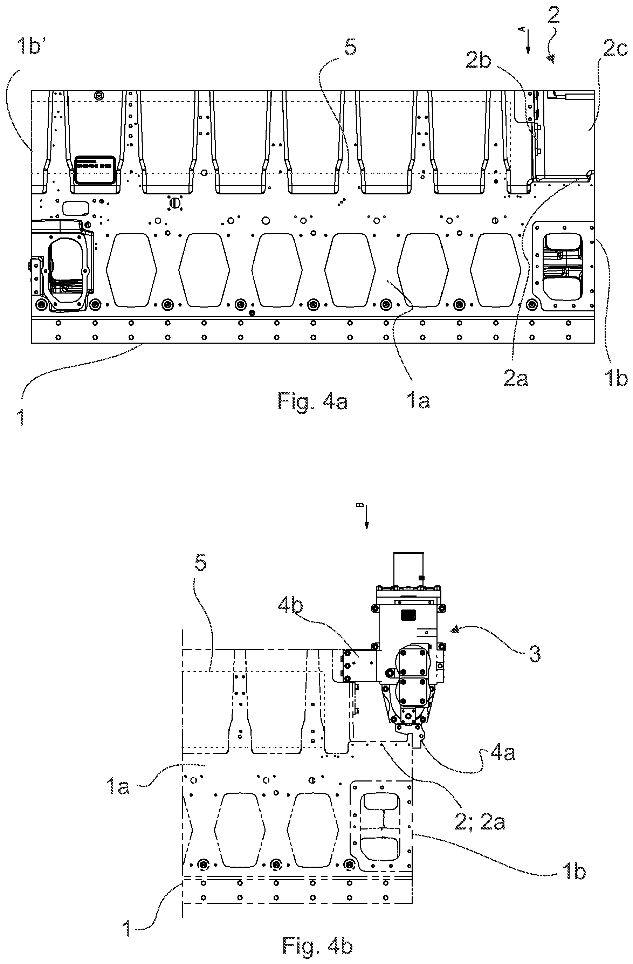

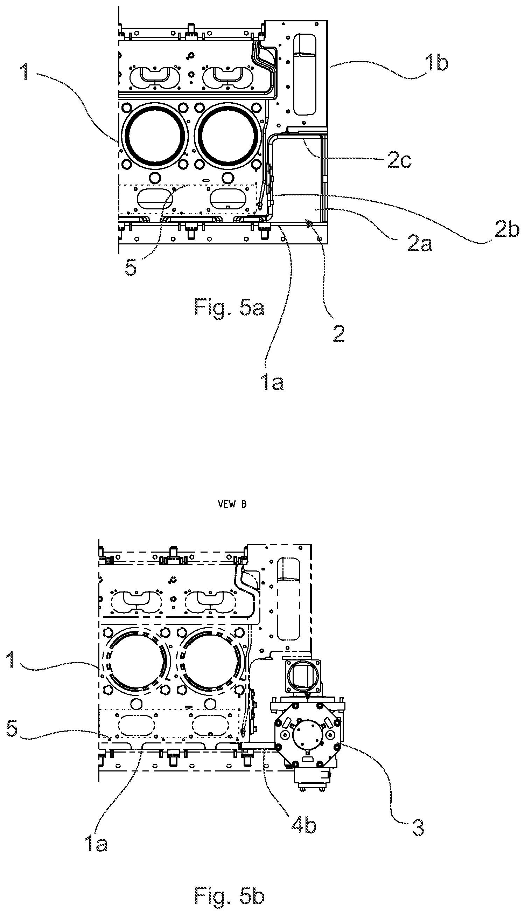

Fig. 3a, Fig. 4a and Fig. 5a illustrate the engine block of Fig. 2 as seen from a longitudinal end 1b of the engine block 1, from a lateral side 1a of the engine block 1 and from above the engine block 1, respectively. Particularly, a position of an internal charge air receiver 5 within the engine block 1 is denoted with a dotted line. The internal charge air receiver extends longitudinally from an opposing longitudinal end 1b' up to a distance from the longitudinal end 1b at which the indentation 2 resides. Moreover, the indentation 2 is arranged on a linear extension of the charge air receiver 5. In other words, the charge air receivers 5 stops short of the indentation 2.

Fig. 3b, Fig. 4b and Fig. 5b illustrate similar configuration as Fig 3a, Fig 4a and Fig. 5a, with the addition of an oil filter 3 fitted in place. Particularly, the oil filter 3 is partially fitted within the indentation 2. Moreover, Figs. 3b, 4b and 5b illustrate brackets 4a, 4b with which the oil filter 3 is attached to the engine block 1. The bracket 4a is fixed between a bottom portion of the oil filter 3 and a bottom surface of the indentation, while the bracket 4b is fixed between the oil filter 3 and a lateral side 1a of the engine block. More specifically, the bracket 4b is attached between a middle portion of the oil 3 filter along its height, although other attachment positions can be provided. Moreover, on the lateral side 1a of the engine block, the bracket 4b is attached at an uppermost position of said lateral side 1a.

### LIST OF REFERENCE NUMERALS

- 1: engine block
- 1a: lateral side of engine block
- 1b: longitudinal end of engine block
- 1b': opposing lateral end of engine block
- 1d: cylinder head
- 2: indentation
- 2a: bottom surface of indentation
- 2b, 2c: side surfaces of indentation
- 3: oil filter
- 4a: bracket
- 4b: bracket
- 5: internal charge air receiver
- 6: exhaust channel
- 7: turbocharger

## Claims

1. A multi-piston engine, comprising
an engine block (1) with a plurality of combustion cylinders arranged along a longitudinal direction of the engine block (1);
a plurality of individual cylinder heads (1d), each corresponding to a respective combustion cylinder,
a longitudinally extending common exhaust channel (6) coupled in fluid communication with the plurality of cylinder heads for receiving exhaust from the combustion cylinders,
a longitudinally extending common charge air receiver (5) coupled in fluid communication with the plurality of cylinder heads (1d) for conducting charged air to the combustion cylinders,
**characterized in that** the engine block (1) comprises an indentation (2) on an outer surface of the engine block (1), the indentation (2) comprising at least a bottom surface (2a) and a side surface (2a, 2b),
wherein the engine further comprises an oil filter (3) at least partly received within said indentation (2), said oil filter (3) being attached to the engine block (1) with brackets (4) extending between the oil filter (3) and the engine block (1).

2. The multi-piston engine according to claim 1, **characterized in that** the oil filter (3) is attached to the engine block (1) at least from a bottom surface (2a) of the indentation (2)

3. The multi-piston engine according to claim 1 or 2, **characterized in that** the oil filter (3) is attached to the engine block (1) at least from a lateral side (1a) of the engine block (1), a longitudinal end (1b) of the engine block (1), or both.

4. The multi-piston engine according to any of the preceding claims 1-3, **characterized in that** the indentation (2) is arranged at an external corner between a lateral side (1a) of the engine block (1) and a longitudinal end (1b) of the engine block (1).

5. The multi-piston engine according to any of the preceding claims 1-4, **characterized in that** the engine block (1) comprises an internal charge air receiver (5) extending longitudinally from an opposing longitudinal end of the engine block up to a distance from a longitudinal end (1b) of the engine block (1), wherein said indentation (2) is arranged on a linear extension of said charge air receiver (5) at the longitudinal end (1b) of the engine block (1).

6. The multi-piston engine according to claim 5, **characterized in that** the engine further comprises a turbocharger (7) operationally coupled to the charge air receiver (5), wherein the indentation (2) is arranged at the longitudinal end (1b) of the engine block opposite to the turbocharger (7).

7. The multi-piston engine according to any of the preceding claims 1-6, **characterized in that** a space above the oil filter (3) is unobstructed, thereby allowing removal of the oil filter (3) by hoisting from above the engine.

8. The multi-piston engine according to any of the preceding claims 1-7, **characterized in that** a vertical projection of a center of mass of the oil filter (3) intersects with bottom surface (2a) of the indentation.

9. The multi-piston engine according to any of the preceding claims 1-8, **characterized in that** a center of mass of the oil filter (3) resides within the indentation (2).

10. The multi-piston engine according to any of the preceding claims 1-9, **characterized in that**, in the lateral direction of the engine, at least 1/2, preferably at least 2/3 of the oil filter (3) resides within the indentation (2).

11. The multi-piston engine according to any of the preceding claims 1-10, **characterized in that**, in the longitudinal direction of the engine, at least 1/2, preferably at least 2/3 of the oil filter (3) resides within the indentation (2).

12. The multi-piston engine according to any of the preceding claims 1-11, **characterized in that**, in the height direction of the engine, at least 1/3, preferably at least 1/2 of the oil filter (3) resides within the indentation.

13. The multi-piston engine according to any of the preceding claims 1-12, **characterized in that** a width of the indentation (2) defined in the lateral direction of the engine block (1) is between 1/4 - 3/4 of the width of engine block (1), preferably 1/2 of the width of the engine block (1).

14. The multi-piston engine according to any of the preceding claims 1-13, **characterized in that** a height of the indentation (2) defined in the vertical direction of the engine block (1) is between 1/4 - 1/2 of the height of engine block (1), preferably 1/3 of the height of the engine block (1).

15. The multi-piston engine according to any of the preceding claims 1-14, **characterized in that** a holding capacity of an engine lubrication oil sump or an engine lubrication oil tank is 1 m3 or above.

16. The multi-piston engine according to claim 15, **characterized in that** the engine comprises lubrication oil channels having a combined volume of no more than 15%, preferably no more than 10%, and more preferably no more than 5% of the holding capacity of the engine lubrication oil sump or engine lubrication oil tank.

17. The multi-piston engine (1) according to any of the preceding claims 1-15, **characterized in that** a weight of the oil filter (3) is between 50% - 200% that of an individual cylinder head (1d).

18. The multi-piston engine according to any of the preceding claims 1-16, **characterized in that** the engine is a reciprocating internal combustion piston engine.

19. A marine vessel, **characterized by** comprising the engine according to any of the preceding claims 1-17.

20. A power plant, **characterized by** comprising the engine according to any of the preceding claims 1-17

## Patentansprüche

1. Mehrzylindermotor umfassend:
einen Motorblock (1) mit mehreren entlang einer Längsrichtung des Motorblocks (1) angeordneten Verbrennungszylindern;
mehrere einzelne Zylinderköpfe (1d), die jeweils einem respektiven Verbrennungszylinder entsprechen,
ein sich längs erstreckender gemeinsamer Abgaskanal (6), der mit den mehreren Zylinderköpfen fluidtechnisch verbunden ist, um Abgase aus den Verbrennungszylindern aufzunehmen,
ein sich längs erstreckender gemeinsamer Ladeluftsammler (5), der mit den mehreren Zylinderköpfen (1d) fluidtechnisch verbunden ist, um Ladeluft zu den Verbrennungszylindern zu führen,
**gekennzeichnet dadurch, dass** der Motorblock (1) an einer Außenfläche des Motorblocks (1) eine Vertiefung (2) aufweist, wobei die Vertiefung (2) mindestens eine Bodenfläche (2a) und eine Seitenfläche (2a, 2b) aufweist,
wobei der Motor ferner einen Ölfilter (3) umfasst, der mindestens teilweise in der Vertiefung (2) aufgenommen ist, wobei der Ölfilter (3) mit Halterungen (4), die sich zwischen dem Ölfilter (3) und dem Motorblock (1) erstrecken, am Motorblock (1) befestigt ist.

2. Mehrzylindermotor nach Anspruch 1, **gekennzeichnet dadurch, dass** der Ölfilter (3) mindestens ausgehend von einer Bodenfläche (2a) der Vertiefung (2) am Motorblock (1) befestigt ist.

3. Mehrzylindermotor nach Anspruch 1 oder 2, **gekennzeichnet dadurch, dass** der Ölfilter (3) mindestens ausgehend von einer lateralen Seite (1a) des Motorblocks (1), einem Längsende (1b) des Motorblocks (1), oder beidem, am Motorblock (1) befestigt ist.

4. Mehrzylindermotor nach einem der vorhergehenden Ansprüche 1 bis 3, **gekennzeichnet dadurch, dass** die Vertiefung (2) an einer äußeren Ecke zwischen einer lateralen Seite (1a) des Motorblocks (1) und einem Längsende (1b) des Motorblocks (1) angeordnet ist.

5. Mehrzylindermotor nach einem der vorhergehenden Ansprüche 1 bis 4, **gekennzeichnet dadurch, dass** der Motorblock (1) einen internen Ladeluftsammler (5) umfasst, der sich in Längsrichtung von einem gegenüberliegenden Ende des Motorblocks bis zu einem Abstand zu einem Längsende (1b) des Motorblocks (1) erstreckt, wobei die Vertiefung (2) in einer linearen Verlängerung des Ladeluftsammlers (5) am Längsende (1b) des Motorblocks (1) angeordnet ist.

6. Mehrzylindermotor nach Anspruch 5, **gekennzeichnet dadurch, dass** der Motor ferner einen Turbolader (7) umfasst, der mit dem Ladeluftsammler (5) betriebswirksam gekoppelt ist, wobei die Vertiefung (2) am entgegengesetzt zum Turbolader (7) gelegenen Längsende (1b) des Motorblocks angeordnet ist.

7. Mehrzylindermotor nach einem der vorhergehenden Ansprüche 1 bis 6, **gekennzeichnet dadurch, dass** ein Raum über dem Ölfilter (3) freigehalten ist, was einen Ausbau des Ölfilters (3) durch Ausheben oberhalb des Motors gestattet.

8. Mehrzylindermotor nach einem der vorhergehenden Ansprüche 1 bis 7, **gekennzeichnet dadurch, dass** eine vertikale Projektion des Massenschwerpunkts des Ölfilters (3) die Bodenfläche (2a) der Vertiefung schneidet.

9. Mehrzylindermotor nach einem der vorhergehenden Ansprüche 1 bis 8, **gekennzeichnet dadurch, dass** der Massenschwerpunkt des Ölfilters (3) innerhalb der Vertiefung (2) liegt.

10. Mehrzylindermotor nach einem der vorhergehenden Ansprüche 1 bis 9, **gekennzeichnet dadurch, dass** in der Seitenrichtung des Motors der Ölfilter (3) zu mindestens 1/2, bevorzugt zu mindestens 2/3, innerhalb der Vertiefung (2) liegt.

11. Mehrzylindermotor nach einem der vorhergehenden Ansprüche 1 bis 10, **gekennzeichnet dadurch, dass** in der Längsrichtung des Motors der Ölfilter (3) zu mindestens 1/2, bevorzugt zu mindestens 2/3, innerhalb der Vertiefung (2) liegt.

12. Mehrzylindermotor nach einem der vorhergehenden Ansprüche 1 bis 11, **gekennzeichnet dadurch, dass** in der Höhenrichtung des Motors der Ölfilter (3) zu mindestens 1/3, bevorzugt zu mindestens 1/2, innerhalb der Vertiefung liegt.

13. Mehrzylindermotor nach einem der vorhergehenden Ansprüche 1 bis 12, **gekennzeichnet dadurch, dass** eine in der Seitenrichtung des Motorblocks (1) definierte Breite der Vertiefung (2) zwischen 1/4 und 3/4 der Breite des Motorblocks (1), bevorzugt 1/2 der Breite des Motorblocks (1), beträgt.

14. Mehrzylindermotor nach einem der vorhergehenden Ansprüche 1 bis 13, **gekennzeichnet dadurch, dass** eine in der vertikalen Richtung des Motorblocks (1) definierte Höhe der Vertiefung (2) zwischen 1/4 und 1/2 der Höhe des Motorblocks (1), bevorzugt 1/3 der Höhe des Motorblocks (1), beträgt.

15. Mehrzylindermotor nach einem der vorhergehenden Ansprüche 1 bis 14, **gekennzeichnet dadurch, dass** ein Fassungsvermögen eines Motorschmierölsumpfs oder eines Motorschmieröltanks 1 m³ oder mehr beträgt.

16. Mehrzylindermotor nach Anspruch 15, **gekennzeichnet dadurch, dass** der Motor Schmierölkanäle umfasst, die ein kombiniertes Volumen von höchstens 15 %, bevorzugt höchstens 10 % und bevorzugter höchstens 5 % des Fassungsvermögens des Motorschmierölsumpfs oder Motorschmieröltanks aufweisen.

17. Mehrzylindermotor (1) nach einem der vorhergehenden Ansprüche 1 bis 15, **gekennzeichnet dadurch, dass** das Gewicht des Ölfilters (3) zwischen 50 % und 200 % des Gewichts eines einzelnen Zylinderkopfs (1d) beträgt.

18. Mehrzylindermotor nach einem der vorhergehenden Ansprüche 1 bis 16, **gekennzeichnet dadurch, dass** es sich beim Motor um eine Hubkolben-Brennkraftmaschine handelt.

19. Wasserfahrzeug, **gekennzeichnet dadurch, dass** es den Motor nach einem der vorhergehenden Ansprüche 1 bis 17 umfasst.

20. Energieerzeugungsanlage, **gekennzeichnet dadurch, dass** sie den Motor nach einem der vorhergehenden Ansprüche 1 bis 17 umfasst.

## Revendications

1. Moteur à plusieurs cylindres comprenant :
un bloc moteur (1) avec plusieurs cylindres de combustion disposés le long de la direction longitudinale du bloc moteur (1);
plusieurs culasses individuelles (1d) correspondant chacune à un cylindre de combustion respectif,
un conduit d'échappement commun (6) s'étendant longitudinalement et relié en communication fluidique avec lesdites plusieurs culasses afin de recueillir les gaz d'échappement provenant des cylindres de combustion,
un collecteur d'air de suralimentation commun (5) s'étendant longitudinalement et relié en communication fluidique avec lesdites plusieurs culasses (1d) afin de mener l'air de suralimentation aux cylindres de combustion,
**caractérisé en ce que** le bloc moteur (1) comprend un renfoncement (2) sur une surface extérieure du bloc moteur (1), ledit renfoncement (2) comprenant au moins une surface inférieure (2a) et une surface latérale (2a, 2b),
le moteur comprenant également un filtre à huile (3) logé au moins partiellement dans le renfoncement (2), ledit filtre à huile (3) étant fixé au bloc moteur (1) à l'aide de supports (4) s'étendant entre le filtre à huile (3) et le bloc moteur (1).

2. Moteur à plusieurs cylindres selon la revendication 1, **caractérisé en ce que** le filtre à huile (3) est fixé au bloc moteur (1) au moins à partir de la surface inférieure (2a) du renfoncement (2).

3. Moteur à plusieurs cylindres selon la revendication 1 ou 2, **caractérisé en ce que** le filtre à huile (3) est fixé au bloc moteur (1) au moins à partir d'un côté latéral (1a) du bloc moteur (1), à partir d'une extrémité longitudinale (1b) du bloc moteur, ou les deux.

4. Moteur à plusieurs cylindres selon l'une des revendications précédentes 1 à 3, **caractérisé en ce que** le renfoncement (2) est situé à un coin extérieur entre un côté latéral (1a) du bloc moteur (1) et une extrémité longitudinale (1b) du bloc moteur (1).

5. Moteur à plusieurs cylindres selon l'une des revendications précédentes 1 à 4, **caractérisé en ce que** le bloc moteur (1) comprend un collecteur d'air de suralimentation intérieur (5) s'étendant longitudinalement d'une extrémité opposée du bloc moteur jusqu'à une distance par rapport à une extrémité longitudinale (1b) du bloc moteur (1), ledit renfoncement (2) étant disposé dans le prolongement linéaire dudit collecteur d'air de suralimentation (5) à l'extrémité longitudinale (1b) du bloc moteur (1).

6. Moteur à plusieurs cylindres selon la revendication 5, **caractérisé en ce que** le moteur comprend également un turbocompresseur (7) relié de manière fonctionnelle au collecteur d'air de suralimentation (5), le renfoncement (2) étant disposé à l'extrémité longitudinale (1b) du bloc moteur opposée au turbocompresseur (7).

7. Moteur à plusieurs cylindres selon l'une des revendications précédentes 1 à 6, **caractérisé en ce qu'**un espace au-dessus du filtre à huile (3) est dégagé, ce qui permet le démontage du filtre à huile (3) par levage par le haut du moteur.

8. Moteur à plusieurs cylindres selon l'une des revendications précédentes 1 à 7, **caractérisé en ce qu'**une projection verticale du centre de masse du filtre à huile (3) croise la surface inférieure (2a) du renfoncement.

9. Moteur à plusieurs cylindres selon l'une des revendications précédentes 1 à 8, **caractérisé en ce que** le centre de masse du filtre à huile (3) est situé à l'intérieur du renfoncement (2).

10. Moteur à plusieurs cylindres selon l'une des revendications précédentes 1 à 9, **caractérisé en ce que**, dans la direction latérale du moteur, au moins 1/2, de préférence au moins 2/3, du filtre à huile (3) est situé à l'intérieur du renfoncement (2).

11. Moteur à plusieurs cylindres selon l'une des revendications précédentes 1 à 10, **caractérisé en ce que**, dans la direction longitudinale du moteur, au moins 1/2, préférablement au moins 2/3, du filtre à huile (3) est situé à l'intérieur du renfoncement (2).

12. Moteur à plusieurs cylindres selon l'une des revendications précédentes 1 à 11, **caractérisé en ce que**, dans la direction de la hauteur du moteur, au moins 1/3, préférablement au moins 1/2, du filtre à huile (3) est situé à l'intérieur du renfoncement (2).

13. Moteur à plusieurs cylindres selon l'une des revendications précédentes 1 à 12, **caractérisé en ce qu'**une largeur du renfoncement (2), définie dans la direction longitudinale du bloc moteur (1), est comprise entre 1/4 et 3/4 de la largeur du bloc moteur (1), de préférence 1/2 de la largeur du bloc moteur (1).

14. Moteur à plusieurs cylindres selon l'une des revendications précédentes 1 à 13, **caractérisé en ce qu'**une hauteur du renfoncement (2), définie dans la direction verticale du bloc moteur (1), est comprise entre 1/4 et 1/2 de la hauteur du bloc moteur (1), de préférence 1/3 de la hauteur du bloc moteur (1).

15. Moteur à plusieurs cylindres selon l'une des revendications précédentes 1 à 14, **caractérisé en ce que** la capacité de rétention d'un carter d'huile de lubrification de moteur ou d'un réservoir d'huile de lubrification de moteur est d'au moins 1 m³.

16. Moteur à plusieurs cylindres selon la revendication 15, **caractérisé en ce que** le moteur comprend des conduits d'huile de lubrification ayant un volume combiné d'au plus 15 %, de préférence au plus 10 % et plus préférentiellement au plus 5 % de la capacité de rétention du carter d'huile de lubrification de moteur ou du réservoir d'huile de lubrification de moteur.

17. Moteur à plusieurs cylindres (1) selon l'une des revendications précédentes 1 à 15, **caractérisé en ce que** le poids du filtre à huile (3) est compris entre 50 % et 200 % de celui d'une culasse individuelle (1d).

18. Moteur à plusieurs cylindres selon l'une des revendications précédentes 1 à 16, **caractérisé en ce que** le moteur est un moteur à combustion interne à piston alternatif.

19. Navire marin, **caractérisé en ce qu'**il comprend le moteur selon l'une des revendications précédentes 1 à 17.

20. Installation de production d'énergie, **caractérisé en ce qu'**elle comprend le moteur selon l'une des revendications précédentes 1 à 17.
